# EUROPÄISCHE PATENTSCHRIFT

(11) **EP 3 874 133 B1**
(45) Veröffentlichungstag und Bekanntmachung des Hinweises auf die Patenterteilung: **07.09.2022**
(21) Anmeldenummer: 19786517.3
(22) Anmeldetag: 07.10.2019
(51) Int. Cl.: F01N 3/20, F01N 9/00

(54) **VERFAHREN ZUM BETREIBEN EINER ABGASNACHBEHANDLUNGSEINRICHTUNG**
METHOD FOR OPERATING AN EXHAUST GAS AFTERTREATMENT DEVICE
PROCÉDÉ SERVANT À FAIRE FONCTIONNER UN SYSTÈME DE RETRAITEMENT DE GAZ D'ÉCHAPPEMENT

(30) Priorität: 29.10.2018 DE 102018218465
(43) Veröffentlichungstag der Anmeldung: 08.09.2021
(73) Patentinhaber: Robert Bosch GmbH, 70442 Stuttgart (DE)
(72) Erfinder: BOOS, Edna, 370 04 Ceske Budejovice (CZ); GEISE, Stefan, 70469 Stuttgart (DE); REGITZ, Thilo, 66111 Saarbruecken (DE); CHAINEUX, Marc, 73635 Rudersberg (DE); HOEFFKEN, Tobias, 70192 Stuttgart (DE)
(86) Internationale Anmeldenummer: PCT/EP2019/076998
(87) Internationale Veröffentlichungsnummer: WO 2020/088882

(56) Entgegenhaltungen:
- WO-A1-2019/170225
- DE-A1-102010 042 461
- DE-A1-102015 117 313
- US-A- 6 125 629
- US-A1- 2015 052 878
- US-A1- 2016 160 725

## Beschreibung

Die Erfindung betrifft ein Verfahren zum Betreiben einer Abgasnachbehandlungseinrichtung für ein Fahrzeug, insbesondere Kraftfahrzeug, mit zumindest einem Tank zur Aufbewahrung und Bereitstellung eines flüssigen Abgasnachbehandlungsmittels, mit zumindest einer ansteuerbaren Fördereinrichtung zum Fördern des Abgasnachbehandlungsmittels, mit zumindest zwei in unterschiedlichen Höhen angeordneten Einspritzvorrichtungen zum Einspritzen des Abgasnachbehandlungsmittels in ein Abgas, und mit zumindest einer Förderleitung zur Verbindung des Tanks mit den zumindest zwei Einspritzvorrichtungen, wobei die Förderleitung zumindest eine Verzweigungsstelle aufweist, an der sich die Förderleitung in eine mit zumindest einer ersten der Einspritzvorrichtungen verbundene erste Teilleitung und eine mit zumindest einer zweiten der Einspritzvorrichtungen verbundene zweite Teilleitung aufteilt, wobei zur Außerbetriebnahme der Abgasnachbehandlungseinrichtung die Fördereinrichtung dazu angesteuert wird, das Abgasnachbehandlungsmittel zumindest aus den Teilleitungen zurückzusaugen.

Ferner betrifft die Erfindung ein Steuergerät sowie eine Abgasnachbehandlungseinrichtung.

### Stand der Technik

Verfahren zum Betreiben einer Abgasnachbehandlungseinrichtung der eingangs genannten Art sind aus dem Stand der Technik bekannt. So ist aus der Veröffentlichung Bargende, Michael u.a. Hrsg. 2018. 18. Internationales Stuttgarter Symposium: Automobil- und Motorentechnik. 1. Auflage. Wiesbaden:
Springer Fachmedien unter der Bezeichnung "Double-Injection SCR (selective catalytic reduction) System" eine Abgasnachbehandlungseinrichtung bekannt, welche zumindest einen Tank, zumindest eine Fördereinrichtung, zumindest zwei in unterschiedlichen Höhen angeordnete Einspritzvorrichtungen und zumindest eine Förderleitung zur Verbindung des Tanks mit den zumindest zwei Einspritzvorrichtungen aufweist. Die Förderleitung weist dabei zumindest eine Verzweigungsstelle auf, an der sich die Förderleitung in eine mit zumindest einer ersten der Einspritzvorrichtungen verbundene erste Teilleitung und eine mit zumindest einer zweiten der Einspritzvorrichtungen verbundene zweite Teilleitung aufteilt. Dabei wird bei einer Außerbetriebnahme der Abgasnachbehandlungseinrichtung die Fördereinrichtung dazu angesteuert, das Abgasnachbehandlungsmittel zumindest aus den Teilleitungen zurückzusaugen, insbesondere um Schäden durch gefrierendes Abgasnachbehandlungsmittel an zumindest einer der Komponenten der Abgasnachbehandlungseinrichtung zu vermeiden.

Ein weiteres Verfahren zum Betreiben einer Abgasnachbehandlungseinrichtung mit zumindest zwei in unterschiedlichen Höhen angeordneten Einspritzvorrichtungen zum Einspritzen des Abgasnachbehandlungsmittels in ein Abgas ist aus US 6 125 629 A bekannt.

### Offenbarung der Erfindung

Erfindungsgemäß ist vorgesehen, dass in einem ersten Schritt das Abgasnachbehandlungsmittel aus der mit der tiefergelegenen Einspritzvorrichtung verbundenen ersten Teilleitung zurückgesaugt wird, und dass anschließend in einem zweiten Schritt das Abgasnachbehandlungsmittel aus der mit der höhergelegenen Einspritzvorrichtung verbundenen zweiten Teilleitung. Der Vorteil hierbei ist, dass ein gezieltes und besonders effizientes Entleeren der jeweiligen Teilleitungen durchgeführt wird. Das gezielte Entleeren zunächst der ersten Teilleitung gewährleistet, dass, im Vergleich zu einer Entleerung zunächst der zweiten Teilleitung, mit reduziertem Energieaufwand ein Rücksaugdruck oder Unterdruck zum Rücksaugen des Abgasnachbehandlungsmittels erzeugbar ist. Insbesondere das dabei in der zweiten Teilleitung zunächst verbleibende Abgasnachbehandlungsmittel gewährleistet, dass ein Luftgehalt oder Luftvolumen in der zweiten Teilleitung minimal ist. Dadurch wird ein zusätzliches Absaugen von Luft aus der zweiten Teilleitung bei Erzeugung des Unterdrucks nicht notwendig, so dass das Abgasnachbehandlungsmittel besonders energieeffizient aus der ersten Teilleitung rückförderbar ist.

Bevorzugt ist vorgesehen, dass in dem ersten Schritt die erste Teilleitung bis zu der Verzweigungsstelle von dem Abgasnachbehandlungsmittel befreit wird. Hierbei ergibt sich der Vorteil, dass die erste Teilleitung in Folge eines Rücksaugvorgangs komplett frei von Abgasnachbehandlungsmittel wird. Damit ist die erste Teilleitung insbesondere bei Temperaturen unterhalb des Gefrierpunktes des Abgasnachbehandlungsmittels vor gefrierendem Abgasnachbehandlungsmittel und damit vor Beschädigungen geschützt.

Besonders bevorzugt ist vorgesehen, dass in dem zweiten Schritt die zweite Teilleitung bis zu der Verzweigungsstelle von dem Abgasnachbehandlungsmittel befreit wird. Es ergibt sich der Vorteil, dass die zweite Teilleitung in Folge eines Rücksaugvorgangs komplett frei von Abgasnachbehandlungsmittel wird. Damit ist auch die zweite Teilleitung insbesondere bei Temperaturen unterhalb des Gefrierpunktes des Abgasnachbehandlungsmittels vor gefrierendem Abgasnachbehandlungsmittel geschützt.

Vorzugsweise wird in dem zweiten Schritt das Abgasnachbehandlungsmittel aus der zweiten Teilleitung derart weit zurückgesaugt, dass die Verzweigungsstelle von dem Abgasnachbehandlungsmittel befreit wird. Der Vorteil hierbei ist, dass die Verzweigungsstelle in Folge eines Rücksaugvorgangs komplett frei von Abgasnachbehandlungsmittel wird. Damit ist auch die Verzweigungsstelle insbesondere bei Temperaturen unterhalb des Gefrierpunktes des Abgasnachbehandlungsmittels vor gefrierendem Abgasnachbehandlungsmittel geschützt. Ein Rücksaugen oder Leersaugen insbesondere der ersten und zweiten Teilleitung sowie der Verzweigungsstelle gewährleistet einen zuverlässigen Betrieb sowie eine hohe Lebensdauer der Abgasnachbehandlungseinrichtung.

Gemäß einer bevorzugten Weiterbildung der Erfindung ist vorgesehen, dass beim Zurücksaugen aus der ersten Teilleitung die erste Einspritzvorrichtung und beim Zurücksaugen aus der zweiten Teilleitung die zweite Einspritzvorrichtung geöffnet oder betätigt wird. Hierbei ergibt sich der Vorteil, dass ein gezieltes Entleeren einer jeweiligen der Teilleitungen besonders einfach durchführbar ist, indem ein Unterdruck in der jeweils zu entleerenden Teilleitung vermieden wird. Wird die erste Teilleitung entleert, so wird vorzugsweise die erste Einspritzvorrichtung geöffnet oder betätigt, während die zweite Einspritzvorrichtung geschlossen oder unbetätigt bleibt. Wird die zweite Teilleitung entleert, so wird vorzugsweise die zweite Einspritzvorrichtung geöffnet oder betätigt, während die erste Einspritzvorrichtung vorzugsweise geschlossen wird. Alternativ bleibt die erste Einspritzvorrichtung bei Entleerung der zweiten Teilleitung geöffnet. Es ergibt sich hierbei weiterhin der Vorteil, dass auch die jeweiligen Einspritzvorrichtungen durch das Öffnen oder Betätigen entleert werden oder in ihnen verbliebenes Abgasnachbehandlungsmittel rückgesaugt wird. Dies erhöht zusätzlich die Lebensdauer der Abgasnachbehandlungseinrichtung.

Vorzugsweise wird als Verzweigungsstelle ein T-Stück verwendet. Der Vorteil hierbei ist, dass das Abgasnachbehandlungsmittel auf einfache Art und Weise in die jeweiligen Teilleitungen und die Förderleitung verteilbar wird.

Besonders bevorzugt ist vorgesehen, dass die erste Teilleitung mit einer V- oder U-förmigen nach oben gerichteten Umlenkung versehen wird, die zwischen der ersten Einspritzvorrichtung und der Verzweigungsstelle liegt. Der Vorteil hierbei ist, dass beim Zurücksaugen von Abgasnachbehandlungsmittel aus der zweiten Teilleitung das Abgasnachbehandlungsmittel daran gehindert wird, in die erste Teilleitung und damit insbesondere in die tiefer gelegene erste Einspritzvorrichtung zu gelangen. Es wird somit gewährleistet, dass in Folge eines Rücksaugvorgangs die erste Teilleitung zuverlässig frei von Abgasnachbehandlungsmittel bleibt.

Vorzugsweise wird die Umlenkung nahe zu der Verzweigungsstelle angeordnet. Hierbei ergibt sich der Vorteil, dass nur ein minimales Volumen von Abgasnachbehandlungsmittel in die Teilleitung gelangt, da dieses bereits nahe der Verzweigungsstelle in die Umlenkung gelangt.

Das Steuergerät zum Betreiben einer Abgasnachbehandlungseinrichtung für ein Fahrzeug gemäß den Merkmalen des Anspruchs 9 zeichnet sich dadurch aus, dass es speziell dazu hergerichtet ist, bei bestimmungsgemäßem Gebrauch das Verfahren nach einem der Ansprüche 1 bis 5 durchzuführen. Es ergeben sich hierbei insbesondere die Vorteile, die bereits im Zusammenhang mit dem Verfahren erläutert wurden. Weiter Vorteile und bevorzugte Merkmale ergeben sich aus dem zuvor Beschriebenen sowie aus den Unteransprüchen.

Die Abgasnachbehandlungseinrichtung gemäß den Merkmalen des Anspruchs 10 zeichnet sich durch das Steuergerät nach Anspruch 9 aus. Es ergeben sich hierbei insbesondere die Vorteile, die bereits im Zusammenhang mit dem Verfahren erläutert wurden. Weitere Vorteile und bevorzugte Merkmale ergeben sich aus dem zuvor Beschriebenen sowie aus den Unteransprüchen.

Vorzugsweise ist vorgesehen, dass die Verzweigungsstelle ein T-Stück ist. Der Vorteil hierbei ist, dass das T-Stück eine besonders einfache Form zur Realisierung der Aufteilung der Förderleitung in die erste Teilleitung und die zweite Teilleitung aufweist. Die T-förmig ausgebildete Verzweigungsstelle weist vorzugsweise einen mit der Förderleitung verbundenen ersten Verzweigungsabschnitt, einen mit der ersten Teilleitung verbundenen zweiten Verzweigungsabschnitt und einen mit der zweiten Teilleitung verbundenen dritten Verzweigungsabschnitt auf.

Vorzugsweise ist vorgesehen, dass die erste Teilleitung eine V- oder U-förmige nach oben gerichtete Umlenkung aufweist, die zwischen der ersten Einspritzvorrichtung und der Verzweigungsstelle angeordnet ist. Es ergeben sich hierbei die bereits im Zusammenhang mit dem Verfahren genannten Vorteile.

Besonders bevorzugt ist vorgesehen, dass die Umlenkung nahe zu der Verzweigungsstelle angeordnet ist. Auch hierbei ergeben sich die bereits im Zusammenhang mit dem Verfahren genannten Vorteile.

Im Folgenden soll die Erfindung anhand der Zeichnungen näher erläutert werden. Dazu zeigen:
- Figur 1: eine Abgasnachbehandlungseinrichtung eines Fahrzeugs gemäß einem ersten Ausführungsbeispiel,
- Figur 2: die Abgasnachbehandlungseinrichtung gemäß einem zweiten Ausführungsbeispiel und
- Figur 3: ein Ablaufdiagramm zum Durchführen eines beispielhaften Verfahrens zum Betreiben der Abgasnachbehandlungseinrichtung.

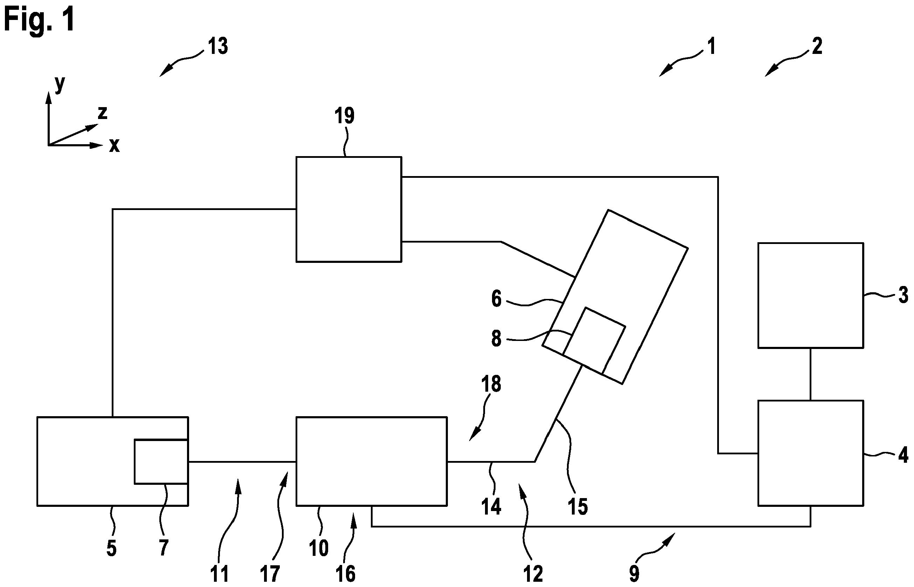

Figur 1 zeigt in einer vereinfachten Darstellung eine Abgasnachbehandlungseinrichtung 1 für ein hier nicht näher dargestelltes Fahrzeug 2, insbesondere ein Kraftfahrzeug. Die in den Figuren gezeigten Proportionen entsprechen dabei nicht den in der Realität bevorzugten Verhältnissen und dienen ausschließlich zur Verbesserung der Anschaulichkeit.

Die Abgasnachbehandlungseinrichtung 1 weist einen Tank 3 zur Aufbewahrung und Bereitstellung eines flüssigen Abgasnachbehandlungsmittels oder Reduktionsmittels, insbesondere einer Harnstofflösung, auf. Das Reduktionsmittel wird dabei zum Reduzieren von Stickoxiden in einem Abgas einer Brennkraftmaschine, beispielsweise einer Diesel-Brennkraftmaschine, des Fahrzeugs 2 genutzt.

Weiterhin weist die Abgasnachbehandlungseinrichtung 1 eine dem Tank 3 zugeordnete, ansteuerbare Fördereinrichtung 4 zum Fördern des Abgasnachbehandlungsmittels auf. Vorzugsweise ist die Fördereinrichtung 4 als elektromotorisch angetriebene Pumpe ausgebildet.

Weiterhin weist die Abgasnachbehandlungseinrichtung 1 zwei in unterschiedlichen Höhen angeordnete Einspritzvorrichtungen 5, 6 zum Einspritzen des Abgasnachbehandlungsmittels in das Abgas auf. Dabei ist die tiefer angeordnete der Einspritzvorrichtungen 5 vorzugsweise im Bereich eines Fahrzeugbodens des Fahrzeugs 2 und die höher angeordnete der Einspritzvorrichtungen 6 im Bereich der Brennkraftmaschine des Fahrzeugs 2 angeordnet. Die tiefer angeordnete der Einspritzvorrichtungen 5 weist gemäß dem Ausführungsbeispiel ein erstes ansteuerbares Dosierventil 7 und die höher angeordnete der Einspritzvorrichtungen 6 ein zweites ansteuerbares Dosierventil 8 auf.

Der Tank 3 ist mit den zumindest zwei Einspritzvorrichtungen 5, 6 durch eine Förderleitung 9 verbunden. Die Förderleitung 9 weist eine Verzweigungsstelle 10 auf, an der sich die Förderleitung 9 in eine mit zumindest einer ersten, vorliegend der tiefer angeordneten der Einspritzvorrichtungen 5 verbundene erste Teilleitung 11, und eine mit zumindest einer zweiten, vorliegend der höher angeordneten der Einspritzvorrichtungen 6 verbundene zweite Teilleitung 12 aufteilt. Vorzugsweise weisen die Förderleitung 9, die erste Teilleitung 11 und die zweite Teilleitung 12 jeweils einen gleichen Querschnitt auf.

Vorzugsweise weist die erste Teilleitung 11 in Fahrzeuglängsrichtung oder in x-Richtung gesehen, siehe hierzu das mit 13 bezeichnete Koordinatensystem, eine geringere Länge und somit bei gleichem Querschnitt der Teilleitungen 11, 12 ein geringeres Volumen auf als die zweite Teilleitung 12. Das Volumen der Förderleitung 9 beträgt beispielsweise 6300 Kubikmillimeter, das Volumen der ersten Teilleitung 11 1500 Kubikmillimeter und das Volumen der zweiten Teilleitung 12 6000 Kubikmillimeter.

Die zweite Teilleitung 12 weist vorliegend einen ersten Teilleitungsabschnitt 14 auf, welcher insbesondere parallel zu der Fahrzeuglängsrichtung verläuft und beispielsweise ein Volumen von 3000 Kubikmillimetern aufweist, und einen zweiten Teilleitungsabschnitt 15, welcher eine vorgebbare Steigung in Richtung senkrecht zu der Fahrzeuglängsrichtung oder in y-Richtung und beispielsweise ein Volumen von 3000 Kubikmillimetern aufweist.

Die Verzweigungsstelle 10 ist vorliegend T-förmig ausgebildet. Alternativ ist die Verzweigungsstelle 10 Y-förmig ausgebildet. Die Verzweigungsstelle 10 weist vorzugsweise einen mit der Förderleitung 9 verbundenen ersten Verzweigungsabschnitt 16, einen mit der ersten Teilleitung 11 verbundenen zweiten Verzweigungsabschnitt 17 und einen mit der zweiten Teilleitung 12 verbundenen dritten Verzweigungsabschnitt 18 auf.

Vorzugsweise ist die Fördereinrichtung 4 dazu ausgebildet, in Richtung der Einspritzvorrichtungen 5, 6 und in eine dazu entgegengesetzte Richtung, insbesondere in Richtung des Tanks 3, zu fördern. Vorzugsweise wird die Fördereinrichtung 4 in Abhängigkeit einer Fahrsituation zur Durchführung eines Fördervorgangs in Richtung der Einspritzvorrichtungen 5, 6 durch ein Steuergerät 19 angesteuert. Zur Außerbetriebnahme der Abgasnachbehandlungseinrichtung 1, insbesondere bei einer Deaktivierung des Fahrzeugs 2, wird die Fördereinrichtung 4 durch das Steuergerät 19 dazu angesteuert, das Abgasnachbehandlungsmittel aus der ersten und/oder zweiten Teilleitung 11, 12 zurückzusaugen beziehungsweise einen Rücksaugvorgang in Richtung des Tanks 3 durchzuführen.

Zusätzlich werden durch das Steuergerät 19 die erste Einspritzvorrichtung 5, insbesondere das erste Dosierventil 7, und die zweite Einspritzvorrichtung 6, insbesondere das zweite Dosierventil 8, angesteuert. Bei einem Zurücksaugen aus der ersten Teilleitung 11 wird die erste Einspritzvorrichtung 5 und beim Zurücksaugen aus der zweiten Teilleitung 12 die zweite Einspritzvorrichtung 6 geöffnet oder betätigt.

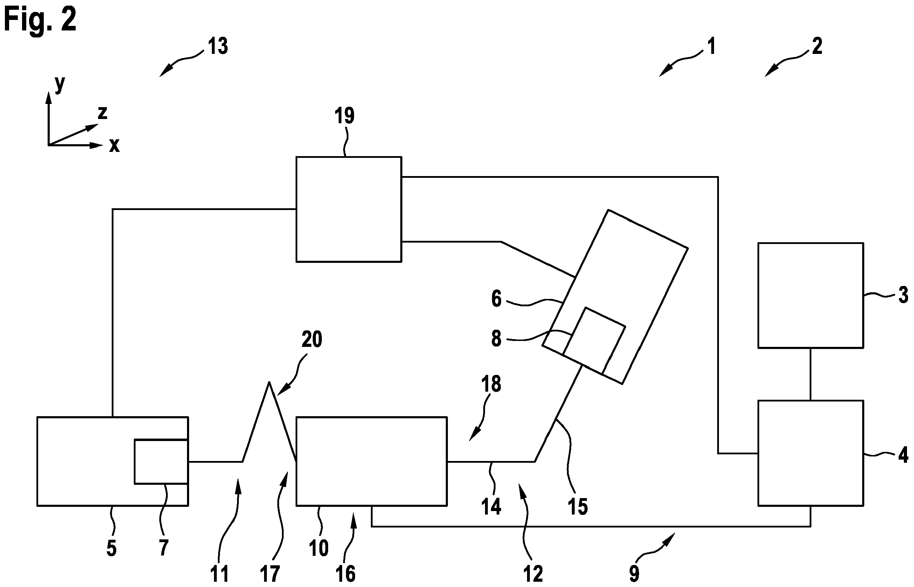

Figur 2 zeigt die Abgasnachbehandlungseinrichtung 1, wobei im Unterschied zu der Figur 1 die erste Teilleitung 11 zusätzlich eine V-förmige nach oben gerichtete Umlenkung 20 aufweist, die zwischen der ersten Einspritzvorrichtung 5 und der Verzweigungsstelle 10 liegt. Die Umlenkung 20 ist dabei nahe zu der Verzweigungsstelle 10 angeordnet. Alternativ ist die Verzweigungsstelle U-förmig, insbesondere siphonförmig.

Der Vorteil hierbei ist, dass bei einem Rücksaugen von Abgasnachbehandlungsmittel aus der zweiten Teilleitung 12 ein Fließen von Abgasnachbehandlungsmittel in die erste Teilleitung 11 und damit in die tiefer angeordnete der Einspritzvorrichtungen 5 besonders effektiv verhindert wird. Bei einem Öffnen der zweiten Einspritzvorrichtung 6, insbesondere des Dosierventils 8, wird somit durch die Umlenkung 20 verhindert, dass eine hydrostatische Verbindung der Teilleitungen 11, 12 erfolgt, bei welcher das Abgasnachbehandlungsmittel bis zur tiefer angeordneten der Einspritzvorrichtungen 5 fließt oder fließen kann.

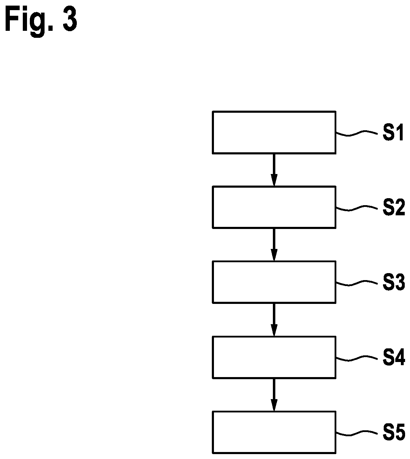

Figur 3 zeigt ein Ablaufdiagramm zum Durchführen eines Verfahrens zum Betreiben der Abgasnachbehandlungseinrichtung gemäß einem Ausführungsbeispiel.

In einem ersten Verfahrensschritt S1 wird die Abgasnachbehandlungseinrichtung 1 außer Betrieb genommen. Dies erfolgt insbesondere durch ein Deaktivieren der Brennkraftmaschine oder des Fahrzeugs 2.

In einem zweiten Verfahrensschritt S2 wird das Abgasnachbehandlungsmittel zunächst aus der mit der tiefer gelegenen der Einspritzvorrichtungen 5 verbunden ersten Teilleitung 11 zurückgesaugt. Vorzugsweise wird dazu die erste Einspritzvorrichtung 5, insbesondere ein ansteuerbares Dosierventil 7 der Einspritzvorrichtung 5, durch Ansteuerung geöffnet oder betätigt. Vorzugsweise wird zum Durchführen des Rücksaugvorgangs die Fördereinrichtung 4 oder eine separate Rücksaugpumpe dazu angesteuert, das Abgasnachbehandlungsmittel aus der Teilleitung 11 zurückzusaugen.

In einem dritten Verfahrensschritt S3 wird die erste Teilleitung 11 bis zu der Verzweigungsstelle 10 von dem Abgasnachbehandlungsmittel befreit. Dabei werden beispielsweise 750 Kubikmillimeter Abgasnachbehandlungsmittel oder ein sonstiges vorgebbares Volumen zurückgesaugt. Vorzugsweise wird eine Zeitdauer des Rücksaugvorgangs oder des Rücksaugens insbesondere in Abhängigkeit des zurückzusaugenden Volumens vorgegeben. Wird insbesondere durch das die Fördereinrichtung 4 ansteuernde Steuergerät 19 erfasst, dass die Zeitdauer abgelaufen ist, wird der Rücksaugvorgang durch Ansteuerung der Fördereinrichtung 4 beendet.

In einem vierten Verfahrensschritt S4 wird das Abgasnachbehandlungsmittel aus der mit der höher gelegenen der Einspritzvorrichtungen 6 verbunden zweiten Teilleitung 12 zurückgesaugt. Vorzugsweise wird dazu die zweite Einspritzvorrichtung 6, insbesondere ein ansteuerbares Dosierventil 8 der Einspritzvorrichtung 6, durch Ansteuerung geöffnet oder betätigt. Vorzugsweise wird dabei die erste Einspritzvorrichtung 5, insbesondere deren Dosierventil 7, geschlossen. Alternativ bleibt dieses geöffnet. Vorzugsweise wird zum Durchführen des Rücksaugvorgangs die Fördereinrichtung 4 oder die separate Rücksaugpumpe dazu angesteuert, das Abgasnachbehandlungsmittel aus der Teilleitung 12 zurückzusaugen.

In einem fünften Verfahrensschritt S5 wird die zweite Teilleitung 12 bis zu der Verzweigungsstelle 10 von dem Abgasnachbehandlungsmittel befreit. Dabei wird das Abgasnachbehandlungsmittel aus der zweiten Teilleitung 12 derart weit zurückgesaugt, dass die Verzweigungsstelle 10 von dem Abgasnachbehandlungsmittel befreit wird. Das hierbei zurückgesaugte Volumen von Abgasnachbehandlungsmittel beträgt beispielsweise 6000 Kubikmillimeter oder ein sonstiges vorgebbares Volumen. Auch hierbei ist vorzugsweise vorgesehen, dass die Zeitdauer des Rücksaugvorgangs oder des Rücksaugens insbesondere in Abhängigkeit des zurückzusaugenden Volumens vorgegeben wird. Wird erfasst, dass die Zeitdauer abgelaufen ist, so wird der Rücksaugvorgang durch Ansteuerung der Fördereinrichtung 4 beendet.

Optional wird bei Außerbetriebnahme der Abgasnachbehandlungseinrichtung 1 zunächst ein hydraulischer Druck im System, insbesondere in der ersten Teilleitung 11 und der zweiten Teilleitung 12, reduziert. Dies erfolgt vorzugsweise durch ein Fördern oder Ablassen von Abgasnachbehandlungsmittel in Richtung des Tanks 3, insbesondere durch Öffnen oder Betätigen zumindest eines in zumindest einer der Teilleitungen 11, 12 und/oder zumindest eines in zumindest einem der Verzweigungsabschnitte 16, 17, 18 angeordneten, insbesondere ansteuerbaren Ventils.

Das Verfahren gewährleistet ein gezieltes und besonders effizientes Entleeren und/oder Belüften der ersten und zweiten Teilleitung 11, 12 sowie der Einspritzvorrichtungen 5, 6 und der Verzweigungsstelle 10. Durch die Entleerung wird ein hydrostatischer Ausgleich zwischen den Teilleitungen 11, 12, also ein insbesondere unerwünschtes Fließen von Abgasnachbehandlungsmittel von einer nur teilentleerten Teilleitung in eine komplett entleerte Teilleitung, vermieden. Dadurch werden die Einspritzvorrichtungen 5, 6, die Teilleitungen 11, 12 und die Verzweigungsstelle 10 insbesondere bei Temperaturen unterhalb einer Gefriertemperatur des Abgasnachbehandlungsmittels, zuverlässig vor Beschädigungen durch gefrierendes Abgasnachbehandlungsmittel geschützt.

Dies gewährleistet, dass insbesondere kostengünstige Ausführungen von T-Stücken oder Konnektoren verwendbar sind.

Durch das beschriebene Verfahren wird ein definierter rückgesaugter Zustand realisiert, der die Einspritzvorrichtungen 5, 6 vor einer unerwünschten Wiederbefüllung schützt und gleichzeitig ein gleichmäßiges Wiederbefüllen der Teilleitungen 11, 12 ohne Lufteinschlüsse ermöglicht. Das Verfahren ist insbesondere bei einer eine große Länge oder ein größeres Volumen aufweisenden zweiten Teilleitung 12 und einer eine geringe Länge oder ein geringeres Volumen aufweisenden ersten Teilleitung 11 durchführbar. Durch das Zurücksaugen des ersten Teilleitung 11 wird zudem gewährleistet, dass ein ausreichender Unterdruck oder Rücksaugdruck erzeugbar ist. Würde beispielsweise zunächst die zweite Teilleitung 12 entleert, so könnte bei anschließender Entnahme des Abgasnachbehandlungsmittels aus der ersten Teilleitung 11 nur ein geringer Unterdruck erzeugt werden, weil durch das große Volumen oder Luftvolumen der entleerten zweiten Teilleitung 12 eine hydraulische Steifigkeit im System sehr gering wäre. Der zu geringe Unterdruck im System würde insbesondere dann nicht zum Entleeren der Teilleitung 11 und der Einspritzvorrichtung 5 ausreichen, wenn zusätzlich ein hydrostatischer Druck, welcher insbesondere abhängig von einer Ansaughöhe ist, überwunden werden müsste. Durch das vorliegende Verfahren wird eine solche Rücksaugsituation vermieden.

## Patentansprüche

1. Verfahren zum Betreiben einer Abgasnachbehandlungseinrichtung (1) für ein Fahrzeug (2), insbesondere Kraftfahrzeug, mit zumindest einem Tank (3) zur Aufbewahrung und Bereitstellung eines flüssigen Abgasnachbehandlungsmittels, mit zumindest einer ansteuerbaren Fördereinrichtung (4) zum Fördern des Abgasnachbehandlungsmittels, mit zumindest zwei in unterschiedlichen Höhen angeordneten Einspritzvorrichtungen (5, 6) zum Einspritzen des Abgasnachbehandlungsmittels in ein Abgas, und mit zumindest einer Förderleitung (9) zur Verbindung des Tanks (3) mit den zumindest zwei Einspritzvorrichtungen (5, ), wobei die Förderleitung (4) zumindest eine Verzweigungsstelle (10) aufweist, an der sich die Förderleitung (4) in eine mit zumindest einer ersten der Einspritzvorrichtungen (5) verbundene erste Teilleitung (11) und eine mit zumindest einer zweiten der Einspritzvorrichtungen (6) verbundene zweite Teilleitung (12) aufteilt, wobei zur Außerbetriebnahme der Abgasnachbehandlungseinrichtung (1) die Fördereinrichtung (4) dazu angesteuert wird, das Abgasnachbehandlungsmittel zumindest aus den Teilleitungen (5, 6) zurückzusaugen, **dadurch gekennzeichnet, dass** in einem ersten Schritt das Abgasnachbehandlungsmittel aus der mit der tiefergelegenen Einspritzvorrichtung (5) verbundenen ersten Teilleitung (11) zurückgesaugt wird und erst anschließend in einem zweiten Schritt das Abgasnachbehandlungsmittel aus der mit der höhergelegenen Einspritzvorrichtung (6) verbundenen zweiten Teilleitung (12).

2. Verfahren nach Anspruch 1, **dadurch gekennzeichnet, dass** in dem ersten Schritt die erste Teilleitung (11) bis zu der Verzweigungsstelle (10) von dem Abgasnachbehandlungsmittel befreit wird.

3. Verfahren nach einem der vorhergehenden Ansprüche, **dadurch gekennzeichnet, dass** in dem zweiten Schritt die zweite Teilleitung (12) bis zu der Verzweigungsstelle (10) von dem Abgasnachbehandlungsmittel befreit wird.

4. Verfahren nach einem der vorhergehenden Ansprüche, **dadurch gekennzeichnet, dass** in dem zweiten Schritt das Abgasnachbehandlungsmittel aus der zweiten Teilleitung (12) derart weit zurückgesaugt wird, dass die Verzweigungsstelle (10) von dem Abgasnachbehandlungsmittel befreit wird.

5. Verfahren nach einem der vorhergehenden Ansprüche, **dadurch gekennzeichnet, dass** beim Zurücksaugen aus der ersten Teilleitung (11) die erste Einspritzvorrichtung (5) und beim Zurücksaugen aus der zweiten Teilleitung (12) die zweite Einspritzvorrichtung (6) geöffnet oder betätigt wird.

6. Verfahren nach einem der vorhergehenden Ansprüche, **dadurch gekennzeichnet, dass** als Verzweigungsstelle (10) ein T-Stück verwendet wird.

7. Verfahren nach einem der vorhergehenden Ansprüche, **dadurch gekennzeichnet, dass** die erste Teilleitung (11) mit einer V- oder U-förmigen nach oben gerichteten Umlenkung (20) versehen wird, die zwischen der ersten Einspritzvorrichtung (5) und der Verzweigungsstelle (10) liegt.

8. Verfahren nach Anspruch 7, **dadurch gekennzeichnet, dass** die Umlenkung (20) nahe zu der Verzweigungsstelle (10) angeordnet wird.

9. Steuergerät (19) zum Betreiben einer Abgasnachbehandlungseinrichtung (1) für ein Fahrzeug (2), insbesondere Kraftfahrzeug, mit zumindest einem Tank (3) zur Aufbewahrung und Bereitstellung eines flüssigen Abgasnachbehandlungsmittels, mit zumindest einer ansteuerbaren Fördereinrichtung (4) zum Fördern des Abgasnachbehandlungsmittels, mit zumindest zwei in unterschiedlichen Höhen angeordneten Einspritzvorrichtungen (5, 6) zum Einspritzen des Abgasnachbehandlungsmittels in ein Abgas, und mit zumindest einer Förderleitung (9) zur Verbindung des Tanks (3) mit den zumindest zwei Einspritzvorrichtungen (5, 6), wobei die Förderleitung (9) zumindest eine Verzweigungsstelle (10) aufweist, an der sich die Förderleitung (9) in eine mit zumindest einer ersten der Einspritzvorrichtungen (5) verbundene erste Teilleitung (11) und eine mit zumindest einer zweiten der Einspritzvorrichtungen (3) verbundene zweite Teilleitung (12) aufteilt, **dadurch gekennzeichnet, dass** das Steuergerät (19) speziell dazu hergerichtet ist, bei bestimmungsgemäßem Gebrauch das Verfahren nach einem der Ansprüche 1 bis 5 durchzuführen.

10. Abgasnachbehandlungseinrichtung (1) für ein Fahrzeug (2), insbesondere Kraftfahrzeug, mit zumindest einem Tank (3) zur Aufbewahrung und Bereitstellung eines flüssigen Abgasnachbehandlungsmittels, mit zumindest einer ansteuerbaren Fördereinrichtung (4) zum Fördern des Abgasnachbehandlungsmittels, mit zumindest zwei in unterschiedlichen Höhen angeordneten Einspritzvorrichtungen (5, 6) zum Einspritzen des Abgasnachbehandlungsmittels in ein Abgas, und mit zumindest einer Förderleitung (9) zur Verbindung des Tanks (3) mit den zumindest zwei Einspritzvorrichtungen (5, 6), wobei die Förderleitung (9) zumindest eine Verzweigungsstelle (10) aufweist, an der sich die Förderleitung (9) in eine mit zumindest einer ersten Einspritzvorrichtung (5) verbundene erste Teilleitung (11) und eine mit zumindest einer zweiten der Einspritzvorrichtungen (6) verbundene zweite Teilleitung (12) aufteilt, **gekennzeichnet durch** das Steuergerät (19) nach Anspruch 9.

11. Abgasnachbehandlungseinrichtung nach Anspruch 10, **dadurch gekennzeichnet, dass** die Verzweigungsstelle (10) ein T-Stück ist.

12. Abgasnachbehandlungseinrichtung nach einem der Ansprüche 10 oder 11, **dadurch gekennzeichnet, dass** die erste Teilleitung (11) eine V- oder U-förmige nach oben gerichtete Umlenkung (20) aufweist, die zwischen der ersten Einspritzvorrichtung (5) und der Verzweigungsstelle (10) liegt.

13. Abgasnachbehandlungseinrichtung nach Anspruch 12, **dadurch gekennzeichnet, dass** die Umlenkung (20) nahe zu der Verzweigungsstelle (10) angeordnet ist.

## Claims

1. Method for operating an exhaust-gas aftertreatment device (1) for a vehicle (2), in particular a motor vehicle, having at least one tank (3) for storing and providing a liquid exhaust-gas aftertreatment medium, having at least one controllable delivery device (4) for delivering the exhaust-gas aftertreatment medium, having at least two injection apparatuses (5, 6) which are arranged at different heights and which serve for injecting the exhaust-gas aftertreatment medium into an exhaust gas, and having at least one delivery line (9) for connecting the tank (3) to the at least two injection apparatuses (5, 6), wherein the delivery line (4) has at least one branch point (10) at which the delivery line (4) is divided into a first sub-line (11), which is connected to at least a first one of the injection apparatuses (5), and a second sub-line (12), which is connected to at least a second one of the injection apparatuses (6), wherein, for putting the exhaust-gas aftertreatment device (1) out of operation, the delivery device (4) is controlled so as to suck back the exhaust-gas aftertreatment medium at least from the sub-lines (5, 6), **characterized in that**, in a first step, the exhaust-gas aftertreatment medium is sucked back from the first sub-line (11), which is connected to the lower injection apparatus (5), and only afterwards, in a second step, is the exhaust-gas aftertreatment medium sucked back from the second sub-line (12), which is connected to the higher injection apparatus (6).

2. Method according to Claim 1, **characterized in that**, in the first step, the first sub-line (11) is freed of the exhaust-gas aftertreatment medium as far as the branch point (10).

3. Method according to either of the preceding claims, **characterized in that**, in the second step, the second sub-line (12) is freed of the exhaust-gas aftertreatment medium as far as the branch point (10) .

4. Method according to one of the preceding claims, **characterized in that**, in the second step, the exhaust-gas aftertreatment medium is sucked back from the second sub-line (12) to such an extent that the branch point (10) is freed of the exhaust-gas aftertreatment medium.

5. Method according to one of the preceding claims, **characterized in that**, at the time of the sucking-back from the first sub-line (11), the first injection apparatus (5) is opened or actuated and, at the time of the sucking-back from the second sub-line (12), the second injection apparatus (6) is opened or actuated.

6. Method according to one of the preceding claims, **characterized in that** a T-piece is used as branch point (10).

7. Method according to one of the preceding claims, **characterized in that** the first sub-line (11) is provided with a V- or U-shaped, upwardly directed diversion means (20) which is situated between the first injection apparatus (5) and the branch point (10) .

8. Method according to Claim 7, **characterized in that** the diversion means (20) is arranged close to the branch point (10).

9. Control unit (19) for operating an exhaust-gas aftertreatment device (1) for a vehicle (2), in particular a motor vehicle, having at least one tank (3) for storing and providing a liquid exhaust-gas aftertreatment medium, having at least one controllable delivery device (4) for delivering the exhaust-gas aftertreatment medium, having at least two injection apparatuses (5, 6) which are arranged at different heights and which serve for injecting the exhaust-gas aftertreatment medium into an exhaust gas, and having at least one delivery line (9) for connecting the tank (3) to the at least two injection apparatuses (5, 6), wherein the delivery line (9) has at least one branch point (10) at which the delivery line (9) is divided into a first sub-line (11), which is connected to at least a first one of the injection apparatuses (5), and a second sub-line (12), which is connected to at least a second one of the injection apparatuses (3), **characterized in that** the control unit (19) is specifically configured to carry out, in the case of intended use, the method according to one of Claims 1 to 5.

10. Exhaust-gas aftertreatment device (1) for a vehicle (2), in particular a motor vehicle, having at least one tank (3) for storing and providing a liquid exhaust-gas aftertreatment medium, having at least one controllable delivery device (4) for delivering the exhaust-gas aftertreatment medium, having at least two injection apparatuses (5, 6) which are arranged at different heights and which serve for injecting the exhaust-gas aftertreatment medium into an exhaust gas, and having at least one delivery line (9) for connecting the tank (3) to the at least two injection apparatuses (5, 6), wherein the delivery line (9) has at least one branch point (10) at which the delivery line (9) is divided into a first sub-line (11), which is connected to at least a first injection apparatuses (5), and a second sub-line (12), which is connected to at least a second one of the injection apparatuses (6), **characterized by** the control unit (19) according to Claim 9.

11. Exhaust-gas aftertreatment device according to Claim 10, **characterized in that** the branch point (10) is a T-piece.

12. Exhaust-gas aftertreatment device according to either of Claims 10 and 11, **characterized in that** the first sub-line (11) has a V- or U-shaped, upwardly directed diversion means (20) which is situated between the first injection apparatus (5) and the branch point (10).

13. Exhaust-gas aftertreatment device according to Claim 12, **characterized in that** the diversion means (20) is arranged close to the branch point (10).

## Revendications

1. Procédé pour exploiter un dispositif de post-traitement de gaz d'échappement (1) pour un véhicule (2), notamment un véhicule automobile, comprenant au moins un réservoir (3) pour stocker et mettre à disposition un agent de post-traitement de gaz d'échappement liquide, comprenant au moins un dispositif d'acheminement (4) pouvant être commandé pour acheminer l'agent de post-traitement de gaz d'échappement, comprenant au moins deux dispositifs d'injection (5, 6) agencés à des hauteurs différentes pour injecter l'agent de post-traitement de gaz d'échappement dans un gaz d'échappement, et comprenant au moins une conduite d'acheminement (9) pour relier le réservoir (3) aux au moins deux dispositifs d'injection (5), la conduite d'acheminement (4) présentant au moins un point de ramification (10), au niveau duquel la conduite d'acheminement (4) se divise en une première conduite partielle (11) reliée à au moins un premier des dispositifs d'injection (5) et une deuxième conduite partielle (12) reliée à au moins un deuxième des dispositifs d'injection (6) ; pour mettre hors service le dispositif de post-traitement de gaz d'échappement (1), le dispositif d'acheminement (4) étant commandé de manière à aspirer l'agent de post-traitement de gaz d'échappement au moins hors des conduites partielles (5, 6), **caractérisé en ce que** dans une première étape, l'agent de post-traitement de gaz d'échappement est aspiré hors de la première conduite partielle (11) reliée au dispositif d'injection (5) situé plus bas et, seulement ensuite, dans une deuxième étape, l'agent de post-traitement de gaz d'échappement est aspiré hors de la deuxième conduite partielle (12) reliée au dispositif d'injection (6) situé plus haut.

2. Procédé selon la revendication 1, **caractérisé en ce que** dans la première étape, la première conduite partielle (11) est débarrassée de l'agent de post-traitement de gaz d'échappement jusqu'au point de ramification (10).

3. Procédé selon l'une quelconque des revendications précédentes, **caractérisé en ce que** dans la deuxième étape, la deuxième conduite partielle (12) est débarrassée de l'agent de post-traitement de gaz d'échappement jusqu'au point de ramification (10).

4. Procédé selon l'une quelconque des revendications précédentes, **caractérisé en ce que** dans la deuxième étape, l'agent de post-traitement de gaz d'échappement est aspiré hors de la deuxième conduite partielle (12) jusqu'à ce que le point de ramification (10) soit débarrassé de l'agent de post-traitement de gaz d'échappement.

5. Procédé selon l'une quelconque des revendications précédentes, **caractérisé en ce que** le premier dispositif d'injection (5) est ouvert ou actionné lors de l'aspiration hors de la première conduite partielle (11) et le deuxième dispositif d'injection (6) est ouvert ou actionné lors de l'aspiration hors de la deuxième conduite partielle (12).

6. Procédé selon l'une quelconque des revendications précédentes, **caractérisé en ce qu'une** pièce en T est utilisée en tant que point de ramification (10).

7. Procédé selon l'une quelconque des revendications précédentes, **caractérisé en ce que** la première conduite partielle (11) est pourvue d'une déviation (20) en forme de V ou de U dirigée vers le haut, qui est située entre le premier dispositif d'injection (5) et le point de ramification (10).

8. Procédé selon la revendication 7, **caractérisé en ce que** la déviation (20) est agencée à proximité du point de ramification (10).

9. Appareil de commande (19) pour exploiter un dispositif de post-traitement de gaz d'échappement (1) pour un véhicule (2), notamment un véhicule automobile, comprenant au moins un réservoir (3) pour stocker et mettre à disposition un agent de post-traitement de gaz d'échappement liquide, comprenant au moins un dispositif d'acheminement (4) pouvant être commandé pour acheminer l'agent de post-traitement de gaz d'échappement, comprenant au moins deux dispositifs d'injection (5, 6) agencés à des hauteurs différentes pour injecter l'agent de post-traitement de gaz d'échappement dans un gaz d'échappement, et comprenant au moins une conduite d'acheminement (9) pour relier le réservoir (3) aux au moins deux dispositifs d'injection (5, 6), la conduite d'acheminement (9) présentant au moins un point de ramification (10) au niveau duquel la conduite d'acheminement (9) se divise en une première conduite partielle (11) reliée à au moins un premier des dispositifs d'injection (5) et une deuxième conduite partielle (12) reliée à au moins un deuxième des dispositifs d'injection (3), **caractérisé en ce que** l'appareil de commande (19) est spécialement conçu, lors de son utilisation conforme, pour réaliser le procédé selon l'une quelconque des revendications 1 à 5.

10. Dispositif de post-traitement de gaz d'échappement (1) pour un véhicule (2), notamment un véhicule automobile, comprenant au moins un réservoir (3) pour stocker et mettre à disposition un agent de post-traitement de gaz d'échappement liquide, comprenant au moins un dispositif d'acheminement (4) pouvant être commandé pour acheminer l'agent de post-traitement de gaz d'échappement, comprenant au moins deux dispositifs d'injection (5, 6) agencés à différentes hauteurs pour injecter l'agent de post-traitement de gaz d'échappement dans un gaz d'échappement, et comprenant au moins une conduite d'acheminement (9) pour relier le réservoir (3) aux au moins deux dispositifs d'injection (5, 6), la conduite d'acheminement (9) présentant au moins un point de ramification (10) au niveau duquel la conduite d'acheminement (9) se divise en une première conduite partielle (11) reliée à au moins un premier dispositif d'injection (5) et une deuxième conduite partielle (12) reliée à au moins un deuxième des dispositifs d'injection (6), **caractérisé par** l'appareil de commande (19) selon la revendication 9.

11. Dispositif de post-traitement de gaz d'échappement selon la revendication 10, **caractérisé en ce que** le point de ramification (10) est une pièce en T.

12. Dispositif de post-traitement de gaz d'échappement selon l'une quelconque des revendications 10 ou 11, **caractérisé en ce que** la première conduite partielle (11) présente une déviation (20) en forme de V ou de U dirigée vers le haut, qui est située entre le premier dispositif d'injection (5) et le point de ramification (10) .

13. Dispositif de post-traitement de gaz d'échappement selon la revendication 12, **caractérisé en ce que** la déviation (20) est agencée à proximité du point de ramification (10).
